# EUROPEAN PATENT SPECIFICATION

(11) **EP 4 480 023 B1**
(45) Date of publication and mention of the grant of the patent: **14.01.2026**
(21) Application number: 22707397.0
(22) Date of filing: 16.02.2022
(51) Int. Cl.: H01M 8/04014, H01M 8/04089, H01M 8/04228, H01M 8/04303

(54) **A FUEL CELL SYSTEM**
BRENNSTOFFZELLENSYSTEM
SYSTÈME DE PILE À COMBUSTIBLE

(43) Date of publication of application: 25.12.2024
(73) Proprietor: Volvo Truck Corporation, 40508 Göteborg (SE)
(72) Inventor: NEILSON, Rohan, 721 31 Västerås (SE); ARYA, Pranav, 437 42 Lindome (SE)
(74) Representative: Kransell & Wennborg KB
(86) International application number: PCT/EP2022/053820
(87) International publication number: WO 2023/155982

(56) References cited:
- DE-A1- 102013 203 310
- JP-A- 2012 114 056
- US-A1- 2008 075 986
- US-A1- 2009 023 040
- US-A1- 2016 380 291
- US-A1- 2017 179 507

## Description

### TECHNICAL FIELD

The invention relates to a fuel cell system for supplying electric power.

The invention can be applied in any application using a fuel cell for supplying electric power, such as in stationary, portable or transport applications. For example, the invention may be applied in heavy-duty vehicles, such as trucks, buses, and construction equipment. Although the invention will be described with respect to a truck, the invention is not restricted to this particular vehicle, but may also be used in other vehicles and vessels, such as in passenger cars, or in stationary applications, such as in backup power generation systems.

### BACKGROUND

A fuel cell is an electrochemical cell which converts chemical energy into electricity. The fuel cell converts the chemical energy of a fuel, typically hydrogen, and an oxidant, typically oxygen, into electricity. Accordingly, a fuel cell can be used as an alternative or as a complement to electric batteries. In recent years fuel cells have been considered for powering electric vehicles.

The fuel cell comprises an anode and an anode flow field to which fuel is supplied, a cathode and a cathode flow field to which oxidant is supplied, and an electrolyte provided between the anode and the cathode. A catalyst provided at the anode causes the fuel to undergo oxidation reactions, generating ions and electrons. The ions move from the anode to the cathode through the electrolyte. Electrons flow from the anode to the cathode through an external circuit, producing electricity. DE 10 2013 203310 A1 and US 2008/075986 A1 relate to fuel cell systems and disclose each a fuel cell system, comprising: a fuel cell stack comprising a first side and a second side, a catalytic device provided separately from the fuel cell stack, a fluid flow assembly configured to supply a first fluid and a second fluid to the fuel cell stack, wherein the fluid flow assembly is configured to selectively enable a fluid flow of the first fluid from the fuel cell stack to the catalytic device, and wherein the fluid flow assembly is further configured to selectively enable a fluid flow of the second fluid directly from the second fluid flow source to the catalytic device.

A fuel cell system which comprises one or more fuel cells is prone to degradation due to start-up and shutdown of the system. Degradation may, e.g., be caused by oxidation resulting from residual oxidant in the fuel cell. Degradation may also be caused by residual fuel in the anode flow field at fuel cell shutdown, which may contaminate the cathode flow field. At fuel cell start-up, the anode and cathode flow fields may contain a mixture of fuel and oxidant, which can cause hot spots and high potentials, contributing to degradation of the fuel cells.

Various strategies exist for reducing degradation mechanisms in connection with start-up and shutdown of fuel cell systems. For example, electric dummy loads may be applied to reduce potentials and burn off excess fuel. Another strategy aims at creating an inert condition on one or both sides of the cell by isolating one of the flow fields and consume the reactant, and/or by carefully controlling the air/fuel mixtures at shutdown.

However, difficulties are associated with the above strategies. For example, using dummy loads may not be an efficient way of reducing highly localized potentials, and inerting methods are often associated with complex and costly sealing systems, large concentration gradients, and incomplete depletion of reactants.

Therefore, there is a strive to develop improved fuel cell systems in which problems with degradation arising at shutdown and start-up of fuel cell systems may be reduced.

### SUMMARY

An object of the invention is to provide a fuel cell system which provides an alternative and/or an improvement in relation to known fuel cell systems. In particular, it is an object to provide a fuel cell system that provides improved conditions for reducing problems with degradation arising at start-up and shutdown of the fuel cell system. In addition, an object of the invention is to provide a method for operating a fuel cell system, an electronic control unit, a vehicle, a computer program, and a computer readable medium.

According to a first aspect of the invention, at least one of the objects is achieved by a fuel cell system for supplying electric power according to claim 1. The fuel cell system comprises:
- a fuel cell stack comprising a first side and a second side,
- a catalytic device provided separately from the fuel cell stack,
- a fluid flow assembly configured to supply a first fluid comprising a first reactant from an associated first fluid flow source to a first flow field on the first side of the fuel cell stack, and a second fluid comprising a second reactant from an associated second fluid flow source to a second flow field on the second side of the fuel cell stack,

wherein the fluid flow assembly is configured to selectively enable a fluid flow of the first fluid from the fuel cell stack to the catalytic device by means of a controllable fluid connection between the catalytic device and the first flow field, and
wherein the fluid flow assembly is further configured to selectively enable a fluid flow of the second fluid directly from the second fluid flow source to the catalytic device by means of a controllable fluid connection between the second fluid flow source and the catalytic device, thereby enabling a reaction at the catalytic device of the first reactant supplied from the first flow field against the second reactant supplied directly from the second fluid flow source.

By the provision of a fuel cell system which comprises a catalytic device provided separately from the fuel cell stack and a fluid flow assembly such as defined above, it is possible to selectively evacuate the first reactant from the fuel cell stack and react it against freshly supplied second reactant outside of the fuel cell stack. Since the catalytic device is provided separately from the fuel cell stack, it may be easily replaced and/or serviced when necessary, without affecting the fuel cell stack.

This is particularly useful to reduce degradation arising in connection with start-up and shutdown of the fuel cell system, since it enables a more efficient passivation of excess reactant from either one of the anode or cathode sides of the fuel cell stack against freshly supplied reactant at the separately provided catalytic device. Thus, the risk of hydrogen leakage and/or electrode oxidation can be reduced.

The fuel cell system may be a proton-exchange membrane fuel cell system, also referred to as a polymer electrolyte membrane (PEM) fuel cell system. The fuel cell may alternatively be another type of fuel cell benefiting from passivation at start-up and/or shutdown.

The fluid flow assembly may comprise a manifold and/or a plurality of fluid conduits, and controllable valves for selectively fluidly connecting the various parts of the fuel cell system to one another as defined above. One or more pumps and/or fans may also be provided. At least one electronic control unit may be provided for controlling the valves and/or pump(s) and/or fan(s).

One of the sides of the fuel cell stack is an anode side and the other side is a cathode side. The fluid flow source for providing fluid comprising an oxidant to the cathode side may, e.g., be in the form of a compressor for providing compressed air. The fluid flow source for providing a fluid comprising a fuel, such as hydrogen, to the anode side may, e.g., comprise one or more fuel injectors, fluidly connected to a fuel tank.

Optionally, the fluid flow assembly is further configured to selectively enable a return flow from the catalytic device to the first flow field and/or to the second flow field of a modified first fluid, the modified first fluid comprising a reduced amount of the first reactant due to consumption at the catalytic device. This is particularly relevant when the first fluid is the oxidant. When the first fluid is air, the modified first fluid may be inerted air, such as in the form of nitrogen gas. Thus, the modified first fluid is an inert fluid which may herein be returned to the first flow field and/or to the second flow field, for example at shutdown of the fuel cell system, thereby protecting the first side and/or the second side from corroding. In particular, it may be beneficial to return inerted air to a cathode side of the fuel cell stack during shutdown and/or start-up of the fuel cell system.

Optionally, said first side of the fuel cell stack is a cathode side and said second side is an anode side. In this case, the first fluid is an oxidant, such as air, and the second fluid is a fuel, such as hydrogen. In alternative embodiments, the first side of the fuel cell stack may be an anode side and the second side may be a cathode side.

Optionally, the fluid flow assembly is further configured to selectively enable a fluid flow of the second fluid from the fuel cell stack to the catalytic device by means of a controllable fluid connection between the catalytic device and the second flow field, and to selectively enable a fluid flow of the first fluid directly from the first fluid flow source to the catalytic device by means of a controllable fluid connection between the first fluid flow source and the catalytic device. Thus, in this case, it is possible to evacuate fluid from either side, or both sides, of the fuel cell stack to the catalytic device, and to further supply fresh reactant directly from either one, or both, of the fluid flow sources to the catalytic device. This enables a very versatile control of the fluid volumes within the fuel cell system. The fluid flow assembly may herein comprise means for selectively fluidly isolating the first flow field and the second flow field from the catalytic device, respectively, such as at least one controllable valve. Thereby, a catalytic mesh or similar can be provided as the catalytic device since it will not be necessary to fluidly isolate the fluid volumes at the catalytic device. Instead, the fluid isolation is achieved by means of valves or similar, preventing undesired fluid flows.

Optionally, the fluid flow assembly comprises means for selectively providing a first-side fluid connection between a first side of the catalytic device and the first flow field and for selectively providing a second-side fluid connection between a second side of the catalytic device and the second flow field, the first-side fluid connection being fluidly isolated from the second-side fluid connection. By providing a first-side and a second-side fluid connection, it is possible to select which one of the anode or cathode reactant should be taken from the associated flow field, and which one should be supplied from the fluid flow source. The means for providing first-side and second-side fluid connections that are fluidly isolated from each other may comprise separate fluid conduits and valves for fluidly connecting the different sides of the fuel cell stack to the different sides of the catalytic device. In this case, the catalytic device may be a catalytic membrane separating the sides of the catalytic device, or a separately provided fuel cell having an anode side and a cathode side.

Optionally, the fluid flow assembly is arranged to fluidly isolate the second flow field from the catalytic device. This is applicable when the second flow field is the cathode flow field as well as when it is the anode flow field, although it is particularly useful when the second flow field is the anode flow field of the fuel cell stack. The catalytic device may herein be a heat exchanger, such as a cabin heater or similar, or a separately provided fuel cell. The possibility to fluidly isolate the second flow field from the catalytic device is furthermore particularly useful when the catalytic device is a catalytic mesh, not allowing fluid isolation at the catalytic device.

Optionally, the fluid flow assembly further comprises a recirculation device arranged for recirculating fluid at least within one of the flow fields, such as within the second flow field. Preferably, there is provided a recirculation device for recirculating fluid at least within the anode flow field, i.e., from an outlet of the anode flow field to an inlet of the anode flow field. The recirculation device may on the one hand be beneficial for transporting fluid to a reaction site, and on the other hand for diluting reactants to avoid concentration gradients. The recirculation device may be a pump or a blower. In some embodiments, the fluid flow assembly may be configured to allow selective fluid joining of the first and second flow fields to create a single flow field, such as when the fuel cell system has been shut down. In such cases, the recirculation device can be used to circulate fluid within the entire single flow field to preserve homogeneity. Two recirculation devices may also be provided, for recirculating fluid within the respective flow fields.

Optionally, the catalytic device comprises a catalytic membrane or a catalytic mesh. The catalytic mesh may e.g. be a platinum coated wire mesh, such as in the form of a rolled, crinkled, or waved sheet. The catalytic membrane may form a boundary that fluidly isolates two sides of the catalytic device from each other, as needed. The catalytic membrane may, e.g., be a catalyst coated proton conducting polymer electrolyte membrane, such as used in a PEM fuel cell.

Optionally, the catalytic device is a catalytic heat exchanger, such as a catalytic heat exchanger of a cabin heater of a vehicle in which the fuel cell system is provided. The heat exchanger may e.g. be a catalytic hydrogen heater. Such a heater may be provided for other reasons and be exploited for at least partial passivation of reactants, such as of air, as necessary. Using a catalytic heat exchanger, the change in heat response arising as fuel and/or oxidant supply to the fuel cell stack is/are initiated can be used for checking whether an oxidant-fuel ratio (lambda value) is acceptable.

Optionally, the catalytic device comprises a fuel cell. The catalytic device may herein comprise a single fuel cell or an auxiliary fuel cell stack of a smaller size than the primary fuel cell stack to which it is fluidly connectable. The fuel cell may comprise a catalytic membrane.

According to a second aspect, at least one of the above defined objects is achieved by a method according to claim 11 for operating a fuel cell system in accordance with the first aspect. The method comprises:
- *controlling* the fluid flow assembly to induce a fluid flow of the first fluid from the fuel cell stack to the catalytic device,
- *controlling* the fluid flow assembly to induce a fluid flow of the second fluid directly from the second fluid flow source to the catalytic device, thereby enabling a reaction at the catalytic device of the first reactant supplied from the first flow field against the second reactant supplied directly from the second fluid flow source.

The method may be used in connection with start-up and/or shutdown of the fuel cell system to reduce problems with degradation of the fuel cell stack. Controlling the fluid flow assembly may be performed by controlling at least one pump and/or fan and/or at least one valve of the fluid flow assembly.

Optionally, when the fluid flow assembly is further configured to selectively enable a return flow from the catalytic device to the first flow field and/or to the second flow field of a modified first fluid, the modified first fluid comprising a reduced amount of the first reactant due to consumption at the catalytic device, the method further comprises:
- *controlling* the fluid flow assembly to induce a return flow from the catalytic device to the first flow field or to the second flow field of the modified first fluid.

Inert conditions may thereby be achieved in the fuel cell stack, e.g., in connection with shutdown of the fuel cell system.

Further advantages and effects of the second aspect of the invention are largely analogous to the advantages and effects of the first aspect of the invention.

According to a third aspect, an electronic control unit for operating a fuel cell system according to the first aspect is provided, wherein the electronic control unit is configured to perform the method according to the second aspect.

According to a fourth aspect, a vehicle comprising the fuel cell system according to the first aspect is provided.

According to a fifth aspect, a computer program comprising program code means for performing the method of the second aspect when said program is run on the electronic control unit according to the third aspect is provided.

According to a sixth aspect, a computer readable medium carrying a computer program comprising program code means for performing the method of the second aspect when said program is run on the electronic control unit according to the third aspect is provided.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic side view of a vehicle;
- Fig. 2: is a schematic view of fuel cell system according to an example embodiment of the invention;
- Fig. 3: is a schematic view of fuel cell system according to another example embodiment of the invention; and
- Fig. 4: is a flow chart illustrating an embodiment of a method according to the invention.

### DETAILED DESCRIPTION OF EXAMPLE EMBODIMENTS OF THE INVENTION

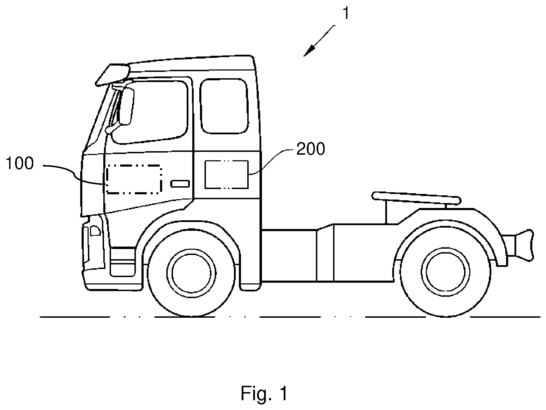

Fig. 1 depicts a side view of a vehicle 1 according to an example embodiment of the invention. The vehicle 1 is here a truck, more specifically a heavy-duty truck for towing one or more trailers (not shown). Even though a heavy-duty truck 1 is shown it shall be noted that the invention is not limited to this type of vehicle but may be used for any other type of vehicle, such as a bus, construction equipment, e.g., a wheel loader and an excavator, and a passenger car. The invention is also applicable for other applications not relating to vehicles as long as a fuel cell is utilized.

The vehicle 1 comprises a fuel cell system 100 according to an example embodiment of the invention. The fuel cell system 100 is here used for powering one or more electric motors (not shown) which are used for creating a propulsion force to the vehicle 1. The fuel cell system 100 may additionally or alternatively be used for powering other electric power consumers of the vehicle 1, such as an electric motor for a refrigerator system, an electric motor for an air conditioning system or any other electric power consuming function of the vehicle 1.

The vehicle 1 further comprises a control unit 200 according to an example embodiment of the invention. The control unit 200 is thus used for controlling the fuel cell system 100. Even though an on-board control unit 200 is shown, it shall be understood that the control unit 200 could also be a remote control unit 200, i.e., an off-board control unit, or a combination of an on-board and off-board control unit. The control unit 200 may be configured to control the fuel cell system 100 by issuing control signals and by receiving status information relating to the fuel cell system 100.

The control unit 200 is an electronic control unit and may comprise processing circuitry which is adapted to run a computer program as disclosed herein. The control unit 200 may comprise hardware and/or software for performing the method according to the invention. In an embodiment the control unit 200 may be denoted a computer. The control unit 200 may be constituted by one or more separate sub-control units. In addition, the control unit 200 may communicate by use of wired and/or wireless communication means.

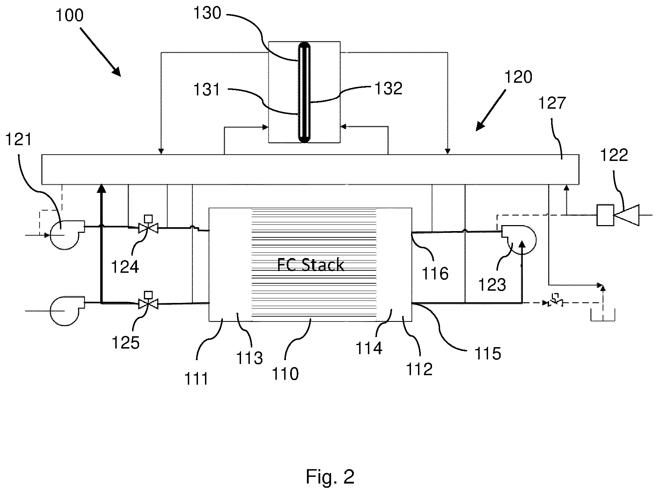

Fig. 2 depicts a schematic illustration of a fuel cell system 100 according to a first example embodiment of the invention. The fuel cell system 100 may for example be used in the vehicle 1 as shown in fig. 1. The shown fuel cell system 100 is a polymer electrolyte (PEM) fuel cell system configured to generate electrical current from a first reactant in the form of oxidant, such as air, and a second reactant in the form of fuel, such as hydrogen.

The fuel cell system 100 comprises a fuel cell stack 110, which in turn comprises a plurality of fuel cells, such as several hundreds of fuel cells. The fuel cell stack 110 has a first side 111 and a second side 112. In the illustrated embodiment, the first side 111 is a cathode side, and the second side 112 is an anode side. Each fuel cell (not illustrated in detail) comprises an anode catalyst and a cathode catalyst provided on opposed sides of a polymer electrolyte. An anode flow path is in fluid communication with the anode catalyst for directing the fuel to flow through the fuel cell adjacent the anode catalyst. A cathode flow path is in fluid communication with the cathode catalyst for directing the oxidant to flow through the fuel cell adjacent the cathode catalyst.

A first fluid flow source 121 in the form of a compressor 121 is further provided for supplying a first fluid comprising the first reactant, i.e., the oxidant. The compressor 121 herein comprises a fresh air intake port and an output port for supplying compressed air to the first side 111 of the fuel cell stack 110.

A second fluid flow source 122 in the form of a fuel injector 122 is further provided for supplying a second fluid comprising the second reactant, i.e., the fuel in the form of hydrogen, to the second side 112. The fuel injector 122 is fluidly connected to a fuel tank (not illustrated).

A fluid flow assembly 120 is further provided. The fluid flow assembly 120 is configured to supply the compressed air from the compressor 121 to a first flow field 113 on the first side 111 of the fuel cell stack 110 via a controllable inlet valve 124. The first flow field 113 herein comprises the cathode flow fields of the fuel cells. The fluid flow assembly 120 is further configured to supply the fuel from the fuel injector 122 to a second flow field 114 on the second side 112 of the fuel cell stack 110. The second flow field 114 herein comprises the anode flow fields of the fuel cells. A controllable outlet valve 125 is provided for draining exhaust fluid and/or excess oxidant from the first flow field 113 to a turbine, and/or to an exhaust outlet. The outlet valve 125 may also be used for pressure control.

A catalytic device 130 is provided separately from the fuel cell stack 110. In the shown embodiment, the catalytic device 130 comprises a catalytic membrane. The fluid flow assembly 120 is configured to selectively enable a fluid flow of the first fluid in the form of oxidant from the fuel cell stack 110 to the catalytic device 130 by means of a controllable fluid connection, such as one or more controllable valves and fluid conduit(s), between the catalytic device 130 and the first flow field 113. The fluid flow assembly 120 is further configured to selectively enable a fluid flow of the second fluid in the form of fuel directly from the fuel injector 122 to the catalytic device 130 by means of a controllable fluid connection between the fuel injector 122 and the catalytic device 130. In this way, a reaction at the catalytic device 130 of the oxidant supplied from the first flow field 113 against the fuel supplied directly from the fuel injector 122 is enabled. Herein, the fluid flow assembly 120 is schematically illustrated as a box 127 comprising unillustrated valving, pump(s) fan(s) and conduits for controlling fluid flows between the fuel cell stack 110, the catalytic device 130, the fluid flow sources 121, 122 as needed.

The fluid flow assembly 120 is configured to selectively enable a return flow from the catalytic device 130 to the first flow field 113 and/or to the second flow field 114 of a modified first fluid, such as inerted air in the form of nitrogen (N₂). As compared to the fresh compressed air provided by the compressor 121, the modified first fluid comprises a reduced amount of oxidant due to consumption at the catalytic device 130. The return flow may be enabled by one or more controllable valves and fluid conduit(s) for fluidly connecting the first flow field 113 and/or the second flow field 114 to a first side 131 of the catalytic device 130.

The fluid flow assembly 120 is in the first embodiment further configured to selectively enable a fluid flow of the second fluid, i.e., the fuel, from the fuel cell stack 110 to the catalytic device 130 by means of a controllable fluid connection between the catalytic device 130 and the second flow field 114. The fuel flow may be enabled by one or more controllable valves and fluid conduit(s) for fluidly connecting the second flow field 114 to a second side 132 of the catalytic device 130.

The fluid flow assembly 120 is herein also configured to selectively enable a fluid flow of the first fluid, i.e., the oxidant, directly from the compressor 121 to the catalytic device 130 by means of a controllable fluid connection between the first fluid flow source 121 and the catalytic device 130. The oxidant flow may be enabled by one or more controllable valves and fluid conduit(s) for fluidly connecting the compressor 121 to the first side 131 of the catalytic device 130. A first-side fluid connection between the first side 131 of the catalytic device 130 and the first flow field 113 and a second-side fluid connection between the second side 132 of the catalytic device 130 and the second flow field 114 are thereby provided. The first-side fluid connection may be fluidly isolated from the second-side fluid connection.

A recirculation device 123 is further provided, which is arranged for recirculating fluid within the second flow field 114, herein the anode flow field. The recirculation device 123 may be a pump or a blower configured for recirculating fluid from an outlet 115 of the second flow field 114 to an inlet 116 of the second flow field 114. Thus, non-consumed fuel may be recirculated within the second flow field 114. The recirculation device 123 may be controllable to allow selective recirculation. Fuel which is not recirculated is drained, and/or may be evacuated to the catalytic device 130 via the fluid flow assembly 120.

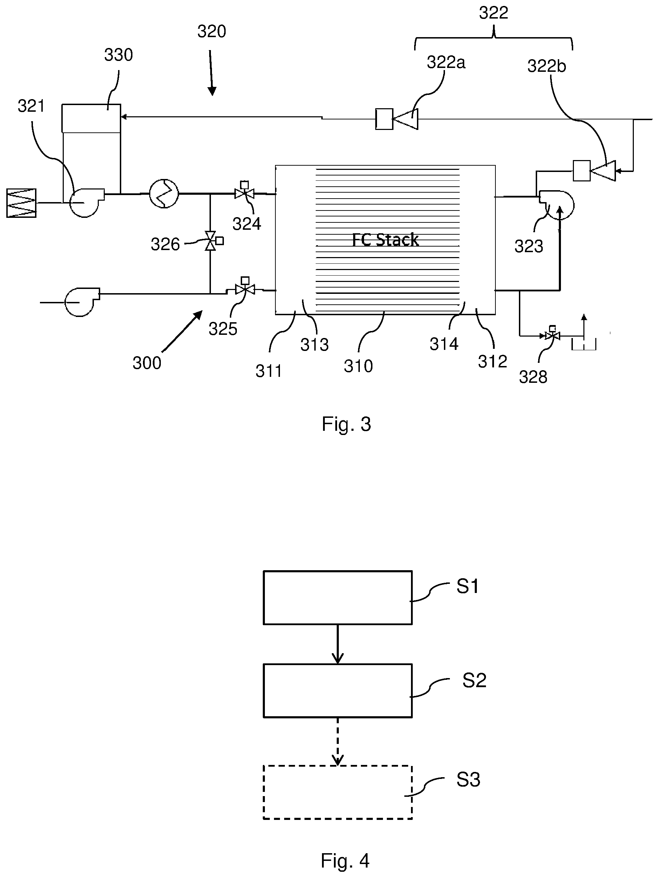

Fig. 3 depicts a schematic illustration of a fuel cell system 300 according to a second example embodiment of the invention. The fuel cell system 300 may e.g., be used in the vehicle 1 illustrated in fig. 1, together with a control unit 200. In the second embodiment, the catalytic device 330 is in the form of a catalytic heat exchanger, such as a catalytic hydrogen heater, but it may instead be in the form of an auxiliary fuel cell stack. The fuel cell system 300 comprises a fuel cell stack 310 identical to the first embodiment, having a first side 311 with a first flow field 313 and a second side 312 with a second flow field 314. The first side 311 corresponds to a cathode side of the fuel cell stack 310, and the second side 312 corresponds to an anode side of the fuel cell stack 310.

A first fluid flow source 321 in the form of a compressor 321 is provided for supplying compressed first fluid in the form of compressed air to the first flow field 313. A second fluid flow source comprising a first fuel injector 322a and a second fuel injector 322b is further provided. The first fluid injector 322a is configured to inject second fluid in the form of fuel to the catalytic device 330, and the second fuel injector 322b is configured to inject second fluid into the second flow field 314 of the fuel cell stack 310. A recirculation device 323 is provided for recirculating fuel within the second flow field 314.

A fluid flow assembly 320 is provided, comprising a plurality of controllable valves 324, 325, 326 and fluid conduits, and optionally at least one pump and/or fan (not illustrated). The valves 324, 325, 326 allow selective fluid connection of the first flow field 313 to the catalytic device 330, enabling evacuation of oxidant from the first flow field 313 to the catalytic device as well as return of modified first fluid, such as inerted air, to the first flow field 313 from the catalytic device 330. Air may also be passed directly to the catalytic device 330 from an air intake, e.g., for reaction against purged fuel from the second flow field 314 to obtain a partially passivated intake stream of first fluid to the first flow field 313. Thereby, oxygen may be depleted, and the cell voltage reduced. At least some of the valves 324, 325, 326 may be used to fluidly isolate the first side 311 from the catalytic device 330, if desired.

The separate fuel injectors 322a, 322b fluidly isolate the second flow field 314 from the catalytic device 330. However, a controllable drain valve 328 may be provided and used to selectively allow a fluid connection between the second flow field 314 and the catalytic device 330 if the drain valve 328 is fluidly connected upstream or downstream of the first fluid injector 322a (connection not shown).

A method for operating a fuel cell system 100, 300 according to any one of the illustrated embodiments is illustrated in fig. 4.

In a first step S1, the fluid flow assembly 120, 320 is controlled to induce a fluid flow of the first fluid from the fuel cell stack 110, 310 to the catalytic device 130, 330.

In a second step S2, the fluid flow assembly 120, 320 is controlled to induce a fluid flow of the second fluid directly from the second fluid flow source 122, 322 to the catalytic device 130, 330, thereby enabling a reaction at the catalytic device 130, 330 of the first reactant supplied from the first flow field 113, 313 against the second reactant supplied directly from the second fluid flow source 122, 322.

An optional third step S3 may be carried out when the fluid flow assembly 120, 320 is configured to selectively enable a return flow from the catalytic device 130, 330 to the first flow field 113, 313 and/or to the second flow field 114, 314 of a modified first fluid, the modified first fluid comprising a reduced amount of the first reactant due to consumption at the catalytic device 130, 330. In the third step S3, the fluid flow assembly 120, 320 is controlled to induce a return flow from the catalytic device 130, 330 to the first flow field 113, 313 or to the second flow field 114, 314 of the modified first fluid, comprising a reduced amount of first reactant.

It is to be understood that the present invention is not limited to the embodiments described above and illustrated in the drawings; rather, the skilled person will recognize that many changes and modifications may be made within the scope of the appended claims.

## Claims

1. A fuel cell system (100, 300) for supplying electric power, comprising:
- a fuel cell stack (110, 310) comprising a first side (111, 311) and a second side (112, 312),
- a catalytic device (130, 330) provided separately from the fuel cell stack (110, 310),
- a fluid flow assembly (120, 320) configured to supply a first fluid comprising a first reactant from an associated first fluid flow source (121, 321) to a first flow field (113, 313) on the first side (111, 311) of the fuel cell stack (110, 310), and a second fluid comprising a second reactant from an associated second fluid flow source (122, 322) to a second flow field (114, 314) on the second side (112, 312) of the fuel cell stack (110, 310),
wherein the fluid flow assembly (120, 320) is configured to selectively enable a fluid flow of the first fluid from the fuel cell stack (110, 310) to the catalytic device (130, 330) by means of a controllable fluid connection between the catalytic device (130, 330) and the first flow field (113, 313), and
wherein the fluid flow assembly (120, 320) is further configured to selectively enable a fluid flow of the second fluid directly from the second fluid flow source (122, 322) to the catalytic device (130, 330) by means of a controllable fluid connection between the second fluid flow source (122, 322) and the catalytic device (130, 330), thereby enabling a reaction at the catalytic device (130, 330) of the first reactant supplied from the first flow field (113, 313) against the second reactant supplied directly from the second fluid flow source (122, 322),
wherein the catalytic device (130, 330) comprises a catalytic membrane, and
wherein the fluid flow assembly (120) comprises means for selectively providing a first-side fluid connection between a first side (131) of the catalytic device (130) and the first flow field (113) and for selectively providing a second-side fluid connection between a second side (132) of the catalytic device (130) and the second flow field (114), the first-side fluid connection being fluidly isolated from the second-side fluid connection, and
wherein the fluid flow assembly (120) is further configured to selectively enable a fluid flow of the second fluid from the fuel cell stack (110) to the catalytic device (130) by means of a controllable fluid connection between the catalytic device (130) and the second flow field (114), and to selectively enable a fluid flow of the first fluid directly from the first fluid flow source (121) to the catalytic device (130) by means of a controllable fluid connection between the first fluid flow source (122) and the catalytic device (130).

2. The fuel cell system according to claim 1, wherein the fluid flow assembly (120, 320) is further configured to selectively enable a return flow from the catalytic device (130, 330) to the first flow field (113, 313) and/or to the second flow field (114, 314) of a modified first fluid, the modified first fluid comprising a reduced amount of the first reactant due to consumption at the catalytic device (130, 330).

3. The fuel cell system according to claim 1 or 2, wherein said first side (111, 311) of the fuel cell stack (110, 310) is a cathode side and said second side (112, 312) is an anode side.

4. The fuel cell system according to any one of claims 1-3, wherein the fluid flow assembly (320) is further arranged to fluidly isolate the second flow field (314) from the catalytic device (330).

5. The fuel cell system according to any one of the preceding claims, wherein the fluid flow assembly further comprises a recirculation device (123, 323) arranged for recirculating fluid within at least one of the flow fields (113, 313, 114, 314), such as within the second flow field (114, 314).

6. A method for operating a fuel cell system in accordance with any one of the preceding claims, the method comprising:
- *controlling* (S1) the fluid flow assembly (120, 320) to induce a fluid flow of the first fluid from the fuel cell stack (110, 310) to the catalytic device (130, 330),
- *controlling* (S2) the fluid flow assembly (120, 320) to induce a fluid flow of the second fluid directly from the second fluid flow source (122, 322) to the catalytic device (130, 330), thereby enabling a reaction at the catalytic device (130, 330) of the first reactant supplied from the first flow field (113, 313) against the second reactant supplied directly from the second fluid flow source (122, 322).

7. The method according to claim 6 when dependent on at least claim 2, further comprising:
- *controlling* (S3) the fluid flow assembly (120, 320) to induce a return flow from the catalytic device (130, 330) to the first flow field (113, 313) or to the second flow field (114, 314) of the modified first fluid.

8. An electronic control unit (200) for operating a fuel cell system (100) according to any one of claims 1-5 wherein the electronic control unit (200) is configured to perform the method according to any one of claims 6-7.

9. A vehicle (1) comprising the fuel cell system (100) according to any one of claims 1-5.

10. A computer program comprising program code means for performing the method of any of claims 6-7 when said program is run on the electronic control unit (200) of claim 8.

11. A computer readable medium carrying a computer program comprising program code means for performing the method of any of claims 6-7 when said program is run on the electronic control unit (200) of claim 8.

## Patentansprüche

1. Brennstoffzellensystem (100, 300) zur Versorgung mit elektrischer Energie, umfassend:
- einen Brennstoffzellenstapel (110, 310) mit einer ersten Seite (111, 311) und einer zweiten Seite (112, 312),
- eine katalytische Vorrichtung (130, 330), die getrennt von dem Brennstoffzellenstapel (110, 310) vorgesehen ist
- eine Fluidströmungsanordnung (120, 320), die konfiguriert ist, um ein erstes Fluid, das einen ersten Reaktanten umfasst, von einer zugehörigen ersten Fluidströmungsquelle (121, 321) zu einem ersten Strömungsfeld (113, 313) auf der ersten Seite (111, 311) des Brennstoffzellenstapels (110, 310), und ein zweites Fluid, das einen zweiten Reaktanten umfasst, von einer zugehörigen zweiten Fluidströmungsquelle (122, 322) zu einem zweiten Strömungsfeld (114, 314) auf der zweiten Seite (112, 312) des Brennstoffzellenstapels (110, 310) zu liefern,
wobei die Fluidströmungsanordnung (120, 320) konfiguriert ist, um selektiv eine Fluidströmung des ersten Fluids von dem Brennstoffzellenstapel (110, 310) zu der katalytischen Vorrichtung (130, 330) mittels einer steuerbaren Fluidverbindung zwischen der katalytischen Vorrichtung (130, 330) und dem ersten Strömungsfeld (113, 313) zu ermöglichen, und
wobei die Fluidströmungsanordnung (120, 320) ferner konfiguriert ist, um selektiv eine Fluidströmung des zweiten Fluids direkt von der zweiten Fluidströmungsquelle (122, 322) zu der katalytischen Vorrichtung (130, 330) mittels einer steuerbaren Fluidverbindung zwischen der zweiten Fluidströmungsquelle (122, 322) und der katalytischen Vorrichtung (130, 330) zu ermöglichen, wodurch an der katalytischen Vorrichtung (130, 330) eine Reaktion des aus dem ersten Strömungsfeld (113, 313) zugeführten ersten Reaktanten mit dem direkt aus der zweiten Fluidströmungsquelle (122, 322) zugeführten zweiten Reaktanten ermöglicht wird,
wobei die katalytische Vorrichtung (130, 330) eine katalytische Membran umfasst, und
wobei die Fluidströmungsanordnung (120) Mittel zum selektiven Bereitstellen einer ersten Seitenfluidverbindung zwischen einer ersten Seite (131) der katalytischen Vorrichtung (130) und dem ersten Strömungsfeld (113) und zum selektiven Bereitstellen einer zweiten Seitenfluidverbindung zwischen einer zweiten Seite (132) der katalytischen Vorrichtung (130) und dem zweiten Strömungsfeld (114) umfasst, wobei die erste Seitenfluidverbindung von der zweiten Seitenfluidverbindung strömungstechnisch getrennt ist, und wobei die Fluidströmungsanordnung (120) ferner konfiguriert ist, um selektiv eine Fluidströmung des zweiten Fluids von dem Brennstoffzellenstapel (110) zu der katalytischen Vorrichtung (130) mittels einer steuerbaren Fluidverbindung zwischen der katalytischen Vorrichtung (130) und dem zweiten Strömungsfeld (114) zu ermöglichen, und um selektiv eine Fluidströmung des ersten Fluids direkt von der ersten Fluidströmungsquelle (121) zu der katalytischen Vorrichtung (130) mittels einer steuerbaren Fluidverbindung zwischen der ersten Fluidströmungsquelle (122) und der katalytischen Vorrichtung (130) zu ermöglichen.

2. Brennstoffzellensystem nach Anspruch 1, wobei die Fluidströmungsanordnung (120, 320) ferner konfiguriert ist, um selektiv eine Rückströmung eines modifizierten ersten Fluids von der katalytischen Vorrichtung (130, 330) zu dem ersten Strömungsfeld (113, 313) und/oder zu dem zweiten Strömungsfeld (114, 314) zu ermöglichen, wobei das modifizierte erste Fluid eine reduzierte Menge des ersten Reaktanten aufgrund des Verbrauchs an der katalytischen Vorrichtung (130, 330) umfasst.

3. Brennstoffzellensystem nach Anspruch 1 oder 2, wobei die erste Seite (111, 311) des Brennstoffzellenstapels (110, 310) eine Kathodenseite ist und die zweite Seite (112, 312) eine Anodenseite ist.

4. Brennstoffzellensystem nach einem der Ansprüche 1-3, wobei die Fluidströmungsanordnung (320) ferner so angeordnet ist, dass sie das zweite Strömungsfeld (314) fluidisch von der katalytischen Vorrichtung (330) trennt.

5. Brennstoffzellensystem nach einem der vorhergehenden Ansprüche, wobei die Fluidströmungsanordnung ferner eine Rezirkulationsvorrichtung (123, 323) umfasst, die zum Rezirkulieren von Fluid innerhalb mindestens eines der Strömungsfelder (113, 313, 114, 314) angeordnet ist, beispielsweise innerhalb des zweiten Strömungsfeldes (114, 314).

6. Verfahren zum Betrieb eines Brennstoffzellensystems nach einem der vorhergehenden Ansprüche, das Verfahren umfassend:
- Steuern (S1) der Fluidströmungsanordnung (120, 320), um einen Fluidstrom des ersten Fluids vom Brennstoffzellenstapel (110, 310) zur katalytischen Vorrichtung (130, 330) zu induzieren,
- Steuern (S2) der Fluidströmungsanordnung (120, 320), um eine Fluidströmung des zweiten Fluids direkt von der zweiten Fluidströmungsquelle (122, 322) zu der katalytischen Vorrichtung (130, 330) zu induzieren, wodurch eine Reaktion an der katalytischen Vorrichtung (130, 330) des ersten Reaktanten, der von dem ersten Strömungsfeld (113, 313) zugeführt wird, gegen den zweiten Reaktanten, der direkt von der zweiten Fluidströmungsquelle (122, 322) zugeführt wird, ermöglicht wird.

7. Verfahren nach Anspruch 6, wenn es von mindestens Anspruch 2 abhängig ist, ferner umfassend:
- Steuern (S3) der Fluidströmungsanordnung (120, 320), um eine Rückströmung von der katalytischen Vorrichtung (130, 330) zu dem ersten Strömungsfeld (113, 313) oder zu dem zweiten Strömungsfeld (114, 314) des modifizierten ersten Fluids zu induzieren.

8. Elektronische Steuereinheit (200) zum Betrieb eines Brennstoffzellensystems (100) nach einem der Ansprüche 1-5, wobei die elektronische Steuereinheit (200) konfiguriert ist, um das Verfahren nach einem der Ansprüche 6-7 durchzuführen.

9. Fahrzeug (1) umfassend das Brennstoffzellensystem (100) nach einem der Ansprüche 1-5.

10. Computerprogramm mit Programmcodemitteln zur Durchführung des Verfahrens nach einem der Ansprüche 6-7, wenn das Programm von der elektronischen Steuereinheit (200) nach Anspruch 8 ausgeführt wird.

11. Computerlesbares Medium mit einem Computerprogramm, das Programmcodemittel zum Durchführen des Verfahrens nach einem der Ansprüche 6-7 umfasst, wenn das Programmprodukt von der elektronischen Steuereinheit (200) nach Anspruch 8 ausgeführt wird.

## Revendications

1. Système de pile à combustible (100, 300) destiné à fournir de l'énergie électrique, comprenant :
- un empilement de piles à combustible (110, 310) comprenant un premier côté (111, 311) et un second côté (112, 312),
- un dispositif catalytique (130, 330) prévu séparément de l'empilement de piles à combustible (110, 310),
- un ensemble d'écoulement fluidique (120, 320) configuré pour fournir un premier fluide comprenant un premier réactif à partir d'une première source d'écoulement fluidique associée (121, 321) à un premier champ d'écoulement (113, 313) sur le premier côté (111, 311) de l'empilement de piles à combustible (110, 310), et un second fluide comprenant un second réactif provenant à partir d'une seconde source d'écoulement fluidique associée (122, 322) vers un second champ d'écoulement (114, 314) sur le second côté (112, 312) de l'empilement de piles à combustible (110, 310),
l'ensemble d'écoulement fluidique (120, 320) étant configuré pour permettre sélectivement un écoulement fluidique du premier fluide de l'empilement de piles à combustible (110, 310) au dispositif catalytique (130, 330) au moyen d'une connexion fluidique contrôlable entre le dispositif catalytique (130, 330) et le premier champ d'écoulement (113, 313), et
l'ensemble d'écoulement fluidique (120, 320) étant en outre configuré pour permettre sélectivement un écoulement fluidique du second fluide directement de la seconde source d'écoulement fluidique (122, 322) au dispositif catalytique (130, 330) au moyen d'une connexion fluidique contrôlable entre la seconde source d'écoulement fluidique (122, 322) et le dispositif catalytique (130, 330), ce qui permet une réaction au niveau du dispositif catalytique (130, 330) du premier réactif fourni à partir du premier champ d'écoulement (113, 313) contre le second réactif fourni directement à partir de la seconde source d'écoulement fluidique (122, 322),
le dispositif catalytique (130, 330) comprenant une membrane catalytique, et
l'ensemble d'écoulement fluidique (120) comprenant des moyens pour établir sélectivement une connexion fluidique de premier côté entre un premier côté (131) du dispositif catalytique (130) et le premier champ d'écoulement (113) et pour établir sélectivement une connexion fluidique de second côté entre un second côté (132) du dispositif catalytique (130) et le second champ d'écoulement (114), la connexion fluidique du premier côté étant isolée fluidiquement de la connexion fluidique du second côté, et l'ensemble d'écoulement fluidique (120) étant en outre configuré pour permettre sélectivement un écoulement fluidique du second fluide de l'empilement de piles à combustible (110) au dispositif catalytique (130) au moyen d'une connexion fluidique contrôlable entre le dispositif catalytique (130) et le second champ d'écoulement (114), et pour permettre sélectivement un écoulement fluidique du premier fluide directement de la première source d'écoulement fluidique (121) au dispositif catalytique (130) au moyen d'une connexion fluidique réglable entre la première source d'écoulement fluidique (122) et le dispositif catalytique (130).

2. Système de pile à combustible selon la revendication 1, dans lequel l'ensemble d'écoulement fluidique (120, 320) est en outre configuré pour permettre sélectivement un écoulement de retour du dispositif catalytique (130, 330) vers le premier champ d'écoulement (113, 313) et/ou vers le second champ d'écoulement (114, 314) d'un premier fluide modifié, le premier fluide modifié comprenant une quantité réduite du premier réactif due à la consommation au niveau du dispositif catalytique (130, 330).

3. Système de pile à combustible selon la revendication 1 ou 2, dans lequel ledit premier côté (111, 311) de l'empilement de piles à combustible (110, 310) est un côté cathode et ledit second côté (112, 312) est un côté anode.

4. Système de pile à combustible selon l'une quelconque des revendications 1 à 3, dans lequel l'ensemble d'écoulement fluidique (320) est en outre agencé pour isoler de manière fluidique le second champ d'écoulement (314) du dispositif catalytique (330).

5. Système de pile à combustible selon l'une quelconque des revendications précédentes, dans lequel l'ensemble d'écoulement fluidique comprend en outre un dispositif de recirculation (123, 323) agencé pour faire recirculer le fluide à l'intérieur d'au moins un des champs d'écoulement (113, 313, 114, 314), comme à l'intérieur du second champ d'écoulement (114, 314).

6. Procédé pour faire fonctionner un système de pile à combustible selon l'une quelconque des revendications précédentes, le procédé comprenant les étapes consistant à :
- commander (S1) l'ensemble d'écoulement fluidique (120, 320) pour induire un écoulement fluidique du premier fluide de l'empilement de piles à combustible (110, 310) au dispositif catalytique (130, 330),
- commander (S2) l'ensemble d'écoulement fluidique (120, 320) pour induire un écoulement fluidique du second fluide directement de la seconde source d'écoulement fluidique (122, 322) au dispositif catalytique (130, 330), ceci permettant une réaction au niveau du dispositif catalytique (130, 330) du premier réactif fourni à partir du premier champ d'écoulement (113, 313) contre le second réactif fourni directement à partir de la seconde source d'écoulement fluidique (122, 322).

7. Procédé selon la revendication 6 lorsqu'elle dépend d'au moins la revendication 2, comprenant en outre l'étape consistant à :
- commander (S3) l'ensemble d'écoulement fluidique (120, 320) pour induire un écoulement de retour du dispositif catalytique (130, 330) vers le premier champ d'écoulement (113, 313) ou vers le second champ d'écoulement (114, 314) du premier fluide modifié.

8. Unité de commande électronique (200) pour faire fonctionner un système de pile à combustible (100) selon l'une quelconque des revendications 1 à 5, l'unité de commande électronique (200) étant configurée pour exécuter le procédé selon l'une quelconque des revendications 6 à 7.

9. Véhicule (1) comprenant le système de pile à combustible (100) selon l'une quelconque des revendications 1 à 5.

10. Programme informatique comprenant un moyen de code de programme pour exécuter le procédé selon l'une quelconque des revendications 6 à 7 lorsque ledit programme est exécuté sur l'unité de commande électronique (200) selon la revendication 8.

11. Support lisible par ordinateur comportant un programme informatique comprenant un moyen de code de programme pour exécuter le procédé selon l'une quelconque des revendications 6 à 7 lorsque ledit programme est exécuté sur l'unité de commande électronique (200) selon la revendication 8.
